# EUROPEAN PATENT APPLICATION

(11) **EP 4 817 971 A1**
(43) Date of publication of application: **07.10.2026**
(21) Application number: 24896286.2
(22) Date of filing: 14.11.2024
(51) Int. Cl.: B60T 8/171, B60T 17/22, B60T 17/18, B60T 8/1755

(54) **PARKING METHOD, VEHICLE, AND STORAGE MEDIUM**

(30) Priority: 27.11.2023 CN 202311595677
(71) Applicant: Great Wall Motor Company Limited, Baoding, Hebei 071000 (CN)
(72) Inventor: ZHANG, Shizhao, Baoding, Hebei 071000 (CN); GAO, Mengqiao, Baoding, Hebei 071000 (CN); ZHAO, Jingwei, Baoding, Hebei 071000 (CN); WANG, Dongxu, Baoding, Hebei 071000 (CN); YANG, Rui, Baoding, Hebei 071000 (CN); CHEN, Guangcun, Baoding, Hebei 071000 (CN)
(74) Representative: Klunker IP Patentanwälte PartG mbB
(86) International application number: PCT/CN2024/132081
(87) International publication number: WO 2025/113195

(57) **Abstract**

Provided are a method for parking a vehicle, a vehicle, and a storage medium. The method is applied to the field of vehicle braking. The method includes: receiving a parking signal transmitted by a communication device (500) or another parking chip other than a present parking chip to which the method is applied; determining a current parking strategy of the present parking chip based on the parking signal; and driving, by using the current parking strategy, a parking mechanism corresponding to the present parking chip to perform parking. The parking mechanism is one parking mechanism included in the first parking device (100) or the second parking device (200).

## Description

### CROSS-REFERENCE TO RELATED APPLICATION

This application is based on and claims priority to Chinese Patent Application No. 202311595677.X, filed on November 27, 2023, the entire contents of which are incorporated herein by reference.

### FIELD

The present disclosure relates to the technical field of vehicle braking, and in particular, to a method for parking a vehicle, a vehicle, and a storage medium.

### BACKGROUND

In the related art, the adoption of an electrical parking system, known as Electrical Park Brake (EPB), overcomes the shortcomings of a traditional mechanical parking brake system. EPB offers better precision and control performance, making it the core parking system for enabling advanced driving assistance, autonomous driving, and deep braking energy recovery in vehicles.

However, although the parking brake system in the related art can realize vehicle braking in the event of a failure by utilizing a redundant parking strategy, emergency braking using a pre-stored fixed parking strategy is difficult to adapt to varying operating conditions. Consequently, when parking is performed using the redundant parking strategy, a vehicle body struggles to remain stable, posing a significant safety risk that requires further improvement.

### SUMMARY

The present disclosure provides a method for parking a vehicle, a vehicle, and a storage medium. The method is capable of receiving a parking instruction from a communication device or another parking chip other than a present parking chip to which the method is applied, without the need for the communication device to uniformly and simultaneously transmit the parking instruction to each parking chip, thereby improving signal transmission efficiency and reducing channel occupation. The present parking chip may determine a current parking strategy based on a parking signal, to satisfy various operating conditions, and control the vehicle to complete a parking action based on the current parking strategy, realizing stable parking of the vehicle, and improving parking safety of the vehicle. Moreover, the chips are independent of each other. When one chip fails, another parking chip other than the faulty parking chip may still complete the parking action to realize redundant parking.

In a first aspect, a method for parking a vehicle is provided. A vehicle includes: a first parking device and a second parking device that are disposed respectively corresponding to a front wheel and a rear wheel, in which each of the first parking device and the second parking device includes two parking mechanisms; a first control assembly configured to drive the first parking device to perform parking, the first control assembly including a first parking chip and a second parking chip; a second control assembly configured to drive the second parking device perform parking, the second control assembly including a third parking chip and a fourth parking chip, in which the first parking chip, the second parking chip, the third parking chip, and the fourth parking chip communicate with each other; and a communication device in communication with the first control assembly or the second control assembly. The method is applied to any one of the first parking chip, the second parking chip, the third parking chip, and the fourth parking chip, and the method includes: receiving a parking signal transmitted by the communication device or another parking chip other than a present parking chip to which the method is applied; determining a current parking strategy of the present parking chip based on the parking signal; and driving, by using the current parking strategy, a parking mechanism corresponding to the present parking chip to perform parking. The parking mechanism is one parking mechanism included in the first parking device or the second parking device.

Through the above technical method, the parking instruction from the communication device or the another parking chip can be received without the need for the communication device to uniformly and simultaneously transmit the parking instruction to each parking chip, thereby improving the signal transmission efficiency and reducing the channel occupation. The present parking chip may determine the current parking strategy based on the parking signal to satisfy various operating conditions, and control the vehicle to complete the parking action based on the current parking strategy, realizing the stable parking of the vehicle, and improving the parking safety of the vehicle. Moreover, the chips are independent of each other. When one chip fails, other chips other than the faulty parking chip can still complete the parking action to realize the redundant parking.

In conjunction with the first aspect, in some possible implementations, the determining the current parking strategy of the present parking chip includes: obtaining overall vehicle information of the vehicle; and determining the current parking strategy based on the overall vehicle information and pose information of a wheel corresponding to the present parking chip.

Through the above technical method, the current parking strategy can be determined based on the overall vehicle information of the vehicle and the pose information of the wheel corresponding to the present parking chip. In this way, the current parking strategy can better satisfy a parking requirement.

In conjunction with the first aspect, in some possible implementations, the driving, by using the current parking strategy, the parking mechanism corresponding to the present parking chip to perform parking includes: obtaining environment information of a current environment where the vehicle is located; determining at least one control parameter of the current parking strategy based on the environment information; and determining a target parking force of the parking mechanism based on the at least one control parameter, to control the parking mechanism corresponding to the present parking chip to perform parking.

Through the above technical method, the current parking strategy can be adjusted based on the environment information of the current environment where the vehicle is located, to determine the target parking force of the parking mechanism corresponding to the present parking chip, enabling the current parking strategy to adapt to different environment information. In this way, parking stability of the vehicle is ensured.

In conjunction with the first aspect, in some possible implementations, the method further includes, prior to the driving, by using the current parking strategy, the parking mechanism corresponding to the present parking chip to perform parking: obtaining an actual service life of a wheel corresponding to the present parking chip; and generating the current parking strategy based on the actual service life and an initial parking strategy.

Through the above technical method, the parking strategy can be adjusted based on the actual service life of the wheel to reduce wheel wear.

In conjunction with the first aspect, in some possible implementations, the generating the current parking strategy based on the actual service life and the initial parking strategy includes: determining whether the actual service life reaches a predetermined life limit; and in response to determining that the actual service life reaches the predetermined life limit, calculating a parking force of a wheel corresponding to the another parking chip, and generating the current parking strategy based on the parking force and the initial parking strategy.

Through the above technical method, the parking strategy can be adjusted based on a determination of whether the wheel reaches its life limit.

In conjunction with the first aspect, in some possible implementations, the method further includes, prior to the driving, by using the current parking strategy, the parking mechanism corresponding to the present parking chip to perform parking: obtaining a driving habit and/or parking preference of a driver; and adjusting the current parking strategy of the present parking chip based on the driving habit and/or the parking preference to obtain an updated current parking strategy, to drive, by using the updated current parking strategy, the parking mechanism corresponding to the present parking chip to perform parking.

Through the above technical method, the parking strategy can be adjusted based on the driving habit and/or the parking preference of the driver. In this way, the current parking strategy is more in line with the driver's habit or preference, thereby improving a driving experience of the driver.

In conjunction with the first aspect, in some possible implementations, the driving habit and/or the parking preference are obtained from a frequency and a wavelength of a historical parking signal of the vehicle.

Through the above technical method, the driving habit and/or the parking preference of the driver can be determined based on the frequency and the wavelength of the historical parking signal of the vehicle, to adjust the parking strategy.

In conjunction with the first aspect, in some possible implementations, the method further includes, prior to the driving, by using the current parking strategy, the parking mechanism corresponding to the present parking chip to perform parking: collecting at least one wheel parameter of a wheel corresponding to the present parking chip; and adjusting the current parking strategy of the present parking chip based on the at least one wheel parameter to obtain an updated current parking strategy, to drive, by using the updated current parking strategy, the parking mechanism corresponding to the present parking chip to perform parking.

Through the above technical method, the parking strategy can be adjusted based on the wheel parameter of the corresponding wheel, which reduces the wheel wear, while enabling the parking strategy to better match an actual condition of the wheel, and allows for a corresponding adjustment to be made to the wheel.

In conjunction with the first aspect, in some possible implementations, the parking signal includes at least one of a parking operating condition signal, a vehicle speed signal, a wheel parameter signal, or a parking-environment operating condition signal.

Through the above technical method, it can be determined whether the vehicle has the parking requirement through various manners.

In conjunction with the first aspect, in some possible implementations, the method further includes, prior to the driving, by using the current parking strategy, the parking mechanism corresponding to the present parking chip to perform parking: detecting whether the vehicle satisfies a predetermined parking condition; and transmitting a parking failure reminder to a driver in response to detecting that the vehicle does not satisfy the predetermined parking condition.

Through the above technical method, the parking failure reminder can be transmitted when the vehicle does not satisfy the predetermined parking condition, facilitating the driver to take control and troubleshoot in a timely manner.

In conjunction with the first aspect, in some possible implementations, the method further includes, while transmitting the parking failure reminder to the driver: generating a parking control recommendation reminder for the vehicle based on overall vehicle information of the vehicle; and pushing the parking control recommendation reminder to the driver.

Through the above technical method, when the vehicle does not satisfy the predetermined parking condition, the parking control recommendation reminder for the vehicle can be generated based on the overall vehicle information, to provide a reference operation for the driver to control the vehicle to perform parking.

In a second aspect, a parking apparatus is provided. A vehicle includes: a first parking device and a second parking device that are disposed respectively corresponding to a front wheel and a rear wheel, in which each of the first parking device and the second parking device includes two parking mechanisms; a first control assembly configured to drive the first parking device to perform parking, the first control assembly including a first parking chip and a second parking chip; a second control assembly configured to drive the second parking device to perform parking, the second control assembly including a third parking chip and a fourth parking chip, in which the first parking chip, the second parking chip, the third parking chip, and the fourth parking chip communicate with each other; and a communication device in communication with the first control assembly or the second control assembly. The apparatus is applied to any one of the first parking chip, the second parking chip, the third parking chip, and the fourth parking chip, and the apparatus includes: a receiving module configured to receive a parking signal transmitted by the communication device or another parking chip other than a present parking chip to which the method is applied; a determination module configured to determine a current parking strategy of the present parking chip based on the parking signal; and a driving module configured to drive, by using the current parking strategy, a parking mechanism corresponding to the present parking chip to perform parking. The parking mechanism is one parking mechanism included in the first parking device or the second parking device.

In conjunction with the second aspect, in some possible implementations, the determination module includes: a first obtaining unit configured to obtain overall vehicle information of the vehicle; and a first determination unit configured to determine the current parking strategy based on the overall vehicle information and pose information of a wheel corresponding to the present parking chip.

In conjunction with the second aspect, in some possible implementations, the driving module includes: a second obtaining unit configured to obtain environment information of a current environment where the vehicle is located; a second determination unit configured to determine at least one control parameter of the current parking strategy based on the environment information; and a third determination unit configured to determine a target parking force of the parking mechanism based on the at least one control parameter, to control the parking mechanism corresponding to the present parking chip to perform parking.

In conjunction with the second aspect, in some possible implementations, the apparatus further includes: a first obtaining module configured to obtain an actual service life of a wheel corresponding to the present parking chip; and a generation module configured to generate the current parking strategy based on the actual service life and an initial parking strategy.

In conjunction with the second aspect, in some possible implementations, the generation module includes: a first judgment unit configured to determine whether the actual service life reaches a predetermined life limit; and a calculation unit configured to, in response to determining that the actual service life reaches the predetermined life limit, calculate a parking force of a wheel corresponding to the another parking chip, and generate the current parking strategy based on the parking force and the initial parking strategy.

In conjunction with the second aspect, in some possible implementations, the apparatus further includes: a second obtaining module configured to obtain a driving habit and/or parking preference of a driver; and a first adjustment module configured to adjust the current parking strategy of the present parking chip based on the driving habit and/or the parking preference to obtain an updated current parking strategy, to drive, by using the updated current parking strategy, the parking mechanism corresponding to the present parking chip to perform parking.

In conjunction with the second aspect, in some possible implementations, the driving habit and/or the parking preference are obtained from a frequency and a wavelength of a historical parking signal of the vehicle.

In conjunction with the second aspect, in some possible implementations, the apparatus further includes: a collection module configured to collect at least one wheel parameter of a wheel corresponding to the present parking chip; and a second adjustment module configured to adjust the current parking strategy of the present parking chip based on the at least one wheel parameter to obtain an updated current parking strategy, to drive, by using the updated current parking strategy, the parking mechanism corresponding to the present parking chip to perform parking.

In conjunction with the second aspect, in some possible implementations, the apparatus further includes: a detection module configured to detect whether the vehicle satisfies a predetermined parking condition; and a reminder module configured to transmit a parking failure reminder to a driver in response to detecting that the vehicle does not satisfy the predetermined parking condition.

In conjunction with the second aspect, in some possible implementations, the reminder module is further configured to generate a parking control recommendation reminder for the vehicle based on overall vehicle information of the vehicle, and push the parking control recommendation reminder to the driver.

In a third aspect, a vehicle is provided. The vehicle includes: a memory; a processor; and a computer program stored in the memory and executable on the processor. The processor executes the program to implement the method for parking a vehicle as described in the above embodiments.

In a fourth aspect, a computer program product is provided. The computer program product includes a computer program code. The computer program code, when running on a computer, causes the computer to execute the method for parking a vehicle in the first aspect or any one of the possible implementations of the first aspect.

Additional aspects and advantages of the present disclosure will be partially set forth in the following description, and partially will become apparent from the following description, or will be learned through practice of the present disclosure.

### BRIEF DESCRIPTION OF THE DRAWINGS

The above and additional aspects and advantages of the present disclosure will become more apparent and more understandable from the following description of embodiments taken in conjunction with the accompanying drawings, in which:
FIG. 1a is a schematic diagram of a system architecture of a method for parking a vehicle according to an embodiment of the present disclosure;
FIG. 1b is a schematic diagram of a system architecture of a method for parking a vehicle according to another embodiment of the present disclosure;
FIG. 2 is a schematic diagram of a system architecture of a method for parking a vehicle according to yet another embodiment of the present disclosure;
FIG. 3 is a schematic diagram of a system architecture of a method for parking a vehicle according to still yet another embodiment of the present disclosure;
FIG. 4 is a flowchart of a method for parking a vehicle according to an embodiment of the present disclosure;
FIG. 5a is a first schematic structural diagram of a parking apparatus according to an embodiment of the present disclosure;
FIG. 5b is a second schematic structural diagram of a parking apparatus according to an embodiment of the present disclosure;
FIG. 5c is a third schematic structural diagram of a parking apparatus according to an embodiment of the present disclosure;
FIG. 5d is a fourth schematic structural diagram of a parking apparatus according to an embodiment of the present disclosure;
FIG. 5e is a fifth schematic structural diagram of a parking apparatus according to an embodiment of the present disclosure;
FIG. 5f is a sixth schematic structural diagram of a parking apparatus according to an embodiment of the present disclosure;
FIG. 5g is a seventh schematic structural diagram of a parking apparatus according to an embodiment of the present disclosure;
FIG. 5h is an eighth schematic structural diagram of a parking apparatus according to an embodiment of the present disclosure; and
FIG. 6 is a schematic structural diagram of a vehicle according to an embodiment of the present disclosure.

### DETAILED DESCRIPTION

The technical solutions in the present disclosure will be described clearly and in detail below with reference to the accompanying drawings. In the description of the embodiments of the present disclosure, unless otherwise specified, "/" means "or". For example, A/B may represent A or B. The term "and/or" in the text only represents a relationship between correlated objects, including three relationships. For example, "A and/or B" may mean three situations: A only exists, B only exists, or both A and B exist. In addition, in the description of the embodiments of the present disclosure, "a plurality of" refers to two or more than two.

Hereinafter, terms such as "first" and "second" are used for purposes of description and are not intended to indicate or imply relative importance, or to implicitly show the number of indicated technical features. Thus, the feature associated with "first" and "second" may include one or more this feature distinctly or implicitly.

A traditional parking brake system takes the form of a mechanical parking brake handle, which can be connected to a parking brake through a handle and a cable to lock the transmission shaft or a rear wheel for braking. When a driver needs to park a vehicle, the driver may manually pull up the parking brake handle to bring a brake plate into contact with the wheel and prevent the vehicle from moving forward. This operation is cumbersome and laborious, and is greatly affected by terrain. A braking effect is poor on uneven terrain, resulting in a large accident risk. In addition, since operation of a mechanical parking system requires driver intervention, the system cannot be compatible with autonomous driving technology, imposing certain limitations on the future development of vehicles.

Based on improvement to the traditional parking brake system, in the related art, electrical parking braking can be implemented through an Electrical Park Brake (EPB) with better precision and control performance, thereby reducing the driver intervention, weakening an impact of a terrain factor on the braking effect, improving parking brake safety, and providing an auxiliary foundation for braking and parking in autonomous driving technology. However, although the parking brake system is capable of achieving vehicle braking using a parking strategy, braking performed using a pre-stored fixed parking strategy is difficult to adapt to different operating conditions, making it hard to keep a vehicle body stable during parking and posing a significant potential safety hazard.

Before explaining the method for parking a vehicle provided according to the embodiments of the present disclosure, a system architecture involved in the embodiments of the present disclosure will first be described.

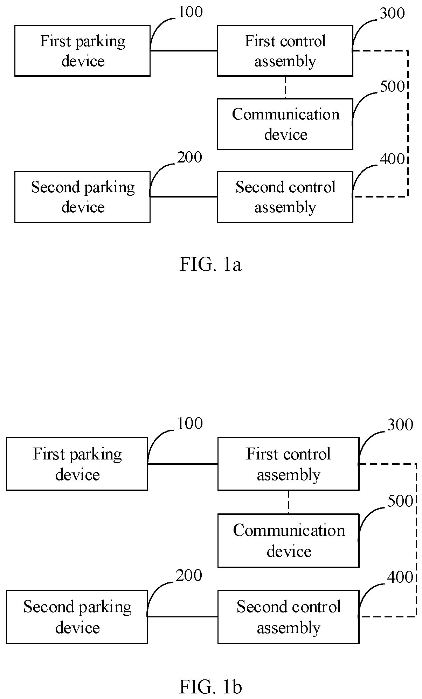

Next, an applicable scenario or the system architecture of the embodiments of the present disclosure will be exemplarily described. Reference is made to FIG. 1a, FIG. 1b, FIG. 2, and FIG. 3.

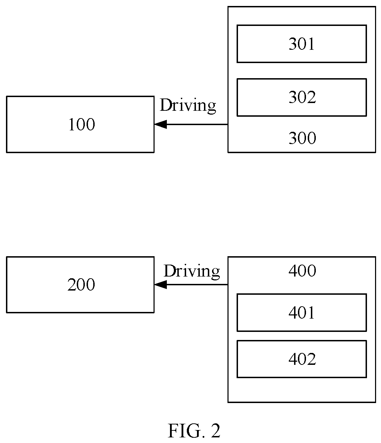

As shown in FIG. 1a, FIG. 1b, and FIG. 2, the system architecture of the embodiments of the present disclosure may include: a first parking device 100, a second parking device 200, a first control assembly 300, a second control assembly 400, and a communication device 500. The first parking device 100 and the second parking device 200 are disposed corresponding to a front wheel and a rear wheel, respectively. Each parking device controls the wheel by driving a corresponding parking mechanism, and each parking mechanism is disposed corresponding to a wheel of the vehicle. The first control assembly 300 includes a first parking chip 301 and a second parking chip 302. The second control assembly 400 includes a third parking chip 401 and a fourth parking chip 402. The first control assembly 300 and the second control assembly 400 may drive the first parking device 100 and the second parking device 200, respectively. The communication device 500 may communicate with the first control assembly 300 or the second control assembly 400. After the communication device 500 transmits a parking signal to any one control assembly of the first control assembly 300 and the second control assembly 400, the one control assembly forwards the parking signal to another control assembly of the first control assembly 300 and the second control assembly 400 to realize transmission of the parking signal. The first control assembly 300 and the second control assembly 400 may communicate with each other. The first parking chip 301, the second parking chip 302, the third parking chip 401, and the fourth parking chip 402 may communicate with each other.

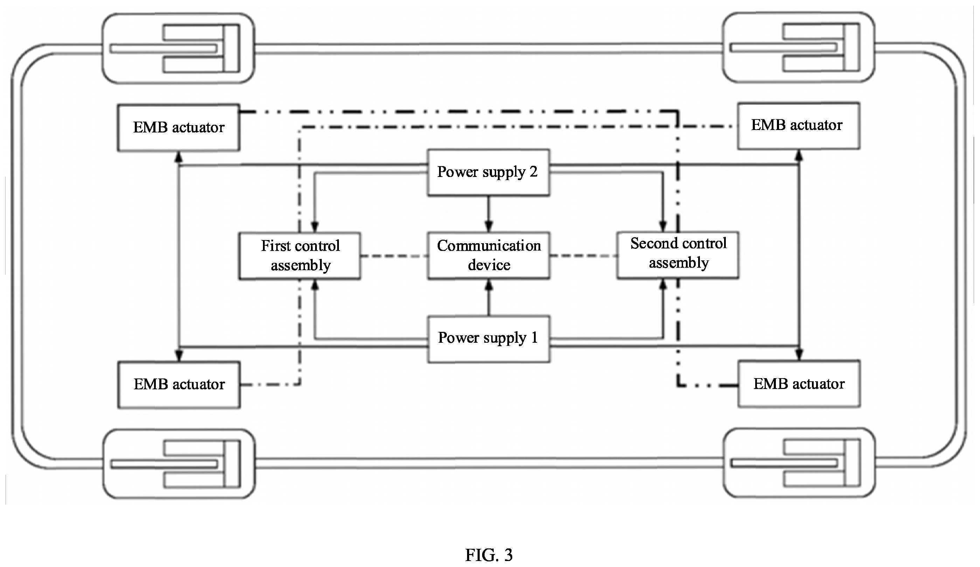

In an embodiment of the present disclosure, as shown in FIG. 3, the first control assembly 300 and the second control assembly 400 may be a front controller and a rear controller, respectively, to control a corresponding parking mechanism, such as an Electromechanical Brake System (EMB) actuator, based on a respective arrangement relationship of the first parking device 100 or the second parking device 200 with the wheel.

The communication device 500 respectively receives a signal from the first control assembly 300 and a signal from the second control assembly 400 for redundancy, ensuring that the communication device 500 can still transmit an instruction to a four-wheel parking mechanism through the parking chip after the first control assembly 300 and the second control assembly 400 fail.

Power supplies supply power to the four parking mechanisms, the first control assembly 300, and the second control assembly 400. One of the power supplies is a redundant power supply to prevent an electrical parking system from failing to operate due to the failure of a certain power supply.

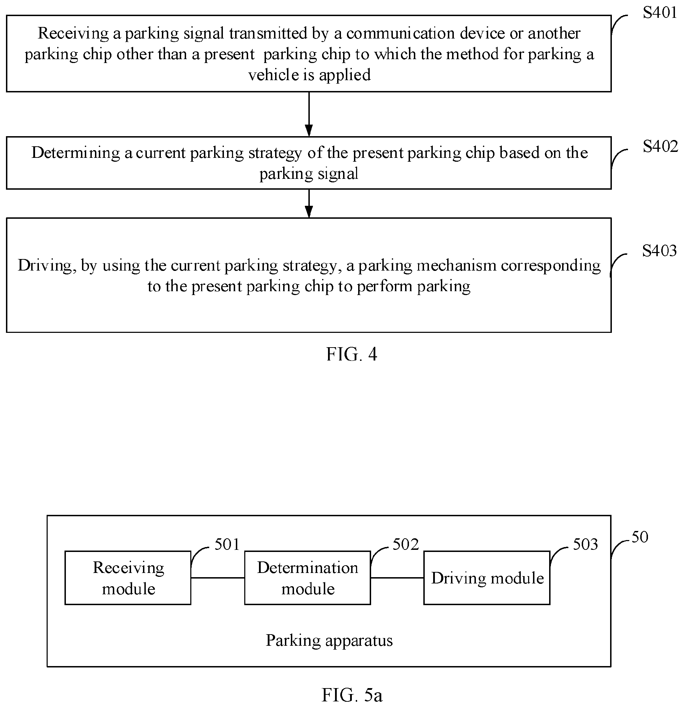

FIG. 4 is a schematic flowchart of a method for parking a vehicle according to an embodiment of the present disclosure. Exemplarily, as shown in FIG. 4, the method is applied to any one parking chip of the first parking chip, the second parking chip, the third parking chip, and the fourth parking chip, and includes following steps S401 to S403.

At step S401, a parking signal transmitted by the communication device or another parking chip, other than a present parking chip to which the method is applied, is received.

In actual implementation, the embodiments of the present disclosure may be applied to any one parking chip of the first parking chip, the second parking chip, the third parking chip, and the fourth parking chip. Then, the parking signal transmitted by the communication device is received, and is forwarded to another parking chip other than the present parking chip to which the embodiments of the present disclosure are applied, or the parking signal forwarded by the another parking chip is received. There is no need for the communication device to uniformly transmit the parking signal to all the parking chips, ensuring efficiency and quality of signal transmission.

At step S402, a current parking strategy of the present parking chip is determined based on the parking signal.

As a possible implementation, the present parking chip in the embodiments of the present disclosure may determine the current parking strategy of the present parking chip after the parking signal is received.

Optionally, in an embodiment of the present disclosure, the parking signal includes at least one of a parking operating condition signal, a vehicle speed signal, a wheel parameter signal, or a parking-environment operating condition signal.

The parking signal may include the parking operating condition signal, the vehicle speed signal, the wheel parameter signal, the parking-environment operating condition signal, and the like.

For example, when a vehicle speed in the parking signal is relatively high, the current parking strategy in the embodiments of the present disclosure may be: providing a deceleration braking force until the vehicle speed drops to a parking-permissible range, and then providing a parking force. When the vehicle is to be parked on level ground and at a relatively high vehicle speed, while transmitting a torque reduction signal to a drive motor, the brake system provides a relatively large deceleration braking force until the vehicle speed drops to 1 kph or below. At this time, the parking mechanism of the vehicle, such as a solenoid valve, operates to complete parking. When the vehicle is to be parked on level ground and at a vehicle speed of 0, the parking force may be provided directly. When the vehicle is to be parked on a ramp and at a non-zero vehicle speed, the torque reduction signal is transmitted to the drive motor, and then the braking system provides a large deceleration braking force until the vehicle is stationary. The solenoid valve operates, and the parking force is determined based on a ramp parameter in the parking operating condition, thereby completing parking. When the vehicle is to be parked on a ramp and at a vehicle speed of 0, the solenoid valve operates, and the parking force is determined based on the ramp parameter in the parking operating condition, thereby completing parking.

Optionally, in an embodiment of the present disclosure, the determining the current parking strategy of the present parking chip includes: obtaining overall vehicle information of the vehicle; and determining the current parking strategy based on the overall vehicle information and pose information of a wheel corresponding to the present parking chip.

In some embodiments, the overall vehicle information of the vehicle may be obtained in the embodiments of the present disclosure. The overall vehicle information may include an accelerator pedal signal, a torque signal, a rotational speed signal, a wheel parameter signal, and the like. In the embodiments of the present disclosure, the pose information of the wheel corresponding to the present parking chip can also be obtained.

It can be understood that when the vehicle is parking, parking forces provided by wheels may be different to adapt to a current road condition and ensure parking safety and stability. For example, when the vehicle is to be parked on a split road, a parking force of a wheel on a high-adhesion side is greater than a parking force of a wheel on a low-adhesion side to prevent unstable vehicle parking.

Therefore, in the embodiments of the present disclosure, the current parking strategy can be determined based on the overall vehicle information and the pose information, such that the current parking strategy can better satisfy a parking requirement.

That is, the four parking chips of the vehicle each correspond to a parking mechanism of one wheel. The present parking chip may estimate data such as a road friction coefficient and a road gradient through corresponding data of each wheel during vehicle braking obtained by a vehicle acceleration sensor, a wheel speed sensor, and the like. Different road adhesion coefficients correspond to different four-wheel target parking forces. Combined with a pose of the wheel corresponding to the present parking chip, such as a determination of whether the corresponding wheel is the front wheel or the rear wheel, an actual target parking force is obtained to obtain the current parking strategy.

For example, in the current parking strategy, the present parking chip may calculate a target parking force of the present parking chip by combining an initial parking force (calculated from wheel parameters such as a wheel radius, a wheel friction force, and a ground friction force), a pose relationship (a pose relationship of the wheel corresponding to the present parking chip, such as a front wheel or a rear wheel), and an initial parking force and a pose relationship of the another parking chip. Moreover, parking timing of the vehicle is determined based on a current motion state of the vehicle (such as an accelerator pedal signal, a torque signal, or a rotational speed signal). In this way, the vehicle is controlled to be parked with the target parking force at the parking timing.

At step S403, a parking mechanism corresponding to the present parking chip is driven using the current parking strategy to perform parking. The parking mechanism is one parking mechanism included in the first parking device or the second parking device.

In the embodiments of the present disclosure, the parking mechanism corresponding to the present parking chip can be driven using the current parking strategy to perform parking, to complete a parking action.

Optionally, in an embodiment of the present disclosure, the driving, by using the current parking strategy, the parking mechanism corresponding to the present parking chip to perform parking includes: obtaining environment information of a current environment where the vehicle is located; determining at least one control parameter of the current parking strategy based on the environment information; and determining a target parking force of the parking mechanism based on the at least one control parameter, to control the parking mechanism corresponding to the present parking chip to perform parking.

It can be understood that an environmental factor may affect the ground friction force, a tire pressure of the wheel, or the like. For example, in rainy and snowy, when there is water accumulation or icing on the ground, the friction force decreases accordingly, and the vehicle needs to increase the parking force to ensure parking stability.

Therefore, in the embodiments of the present disclosure, the environment information of the current environment where the vehicle is located, such as a rainy and snowy environment, a plateau environment, or a high-temperature environment, can be obtained through a vehicle sensor such as a temperature sensor, a pressure sensor, a humidity sensor, a camera, or a wheel speed sensor, to determine the at least one control parameter of the current parking strategy based on the environment information. The control parameters may include a braking force parameter, a parking mechanism control parameter, a parking response time parameter, and the like. The braking force parameter may affect a parking state of the vehicle, i.e., whether the vehicle can realize a dynamic parking function and a static parking function. The parking mechanism control parameter may affect the parking state of the vehicle, i.e., whether the vehicle can maintain its parking state after being stationary. The parking response time parameter may affect a parking trigger time of the vehicle, i.e., whether the vehicle can complete parking in a short time under a poor road operating condition to avoid its slipping and loss of control.

In some embodiments, when the vehicle is in the parking state but slides due to an external impact, if a surrounding environment is different from that when the vehicle was parked, such as water accumulation, icing, or gravel occurring on the ground, it is difficult to ensure stable parking of the vehicle in response to the vehicle still controlling the wheel based on the parking force during parking. At this time, in the embodiments of the present disclosure, a new target parking force can be determined based on the environment information, thereby ensuring that the vehicle can park stably again.

In the embodiments of the present disclosure, the target parking force of the parking mechanism can be determined based on the at least one control parameter, thereby controlling the parking mechanism corresponding to the present parking chip to perform parking.

Through the above technical method, the current parking strategy can be adjusted based on the environment information of the current environment where the vehicle is located, to determine the target parking force of the parking mechanism corresponding to the present parking chip, enabling the current parking strategy to adapt to different environment information and thus ensuring the parking stability.

Optionally, in an embodiment of the present disclosure, the method further includes, prior to the driving, by using the current parking strategy, the parking mechanism corresponding to the present parking chip to perform parking: obtaining an actual service life of a wheel corresponding to the present parking chip; and generating the current parking strategy based on the actual service life and an initial parking strategy.

In some embodiments, before the parking mechanism corresponding to the present parking chip is driven using the current parking strategy to perform parking, in the embodiments of the present disclosure, the current parking strategy can be further determined based on the actual service life of the wheel corresponding to the present parking chip. The actual service life of the wheel may include a service life of a tire, a rim, a bearing, a spoke plate, or the like.

Optionally, in an embodiment of the present disclosure, the generating the current parking strategy based on the actual service life and the initial parking strategy includes: determining whether the actual service life reaches a predetermined life limit; and in response to determining that the actual service life reaches the predetermined life limit, calculating a parking force of a wheel corresponding to the another parking chip, and generating the current parking strategy based on the parking force and the initial parking strategy.

For example, when a tire of one wheel of the wheels of the vehicle reaches its service life, and a parking force of the one wheel is reduced, a parking force of another wheel of the wheels needs to satisfy a parking force distribution curve function to achieve the stable parking. A calculation formula of the parking force distribution curve function may be: ${F}_{μ 2} \frac{1}{2} \left[\frac{G}{{h}_{g}}\sqrt{{b}^{2} \frac{4 {h}_{g} L}{G} {F}_{μ 1}}-\left(\frac{Gb}{{h}_{g}}2{F}_{μ 1}\right)\right] ,$ where:
*F_{µ1}* represents a front wheel parking force (N), *F_{µ2}* represents a rear wheel parking force (N), G represents a vehicle gravity (N), *h_{g}* represents a vehicle's height of center of mass (m), b represents a distance from the vehicle's height of center of mass to a rear axle center line (m), and L represents a vehicle wheelbase (m).

It should be noted that the service life of the wheel affects an execution result of a wheel parking strategy. Meanwhile, an unreasonable parking strategy accelerates wheel wear and reduces the service life of the wheel. Therefore, the initial parking strategy is adjusted based on the actual service life of the wheel, enabling the vehicle to allocate an achievable parking force for each wheel while ensuring the parking stability, and reducing the wheel wear.

For example, when the service life of the wheel corresponding to the present parking chip is relatively low, such as when severe wear on a wheel surface results in a reduced friction force with the ground, in the embodiments of the present disclosure, parking can be achieved by increasing the parking force of the wheel corresponding to the another parking chip, or it can be ensured that the friction force of the wheel with the ground is kept the same as that of the other wheel by increasing the parking force of the wheel corresponding to the present parking chip.

Optionally, in an embodiment of the present disclosure, the method further includes, prior to the driving, by using the current parking strategy, the parking mechanism corresponding to the present parking chip to perform parking: obtaining a driving habit and/or parking preference of a driver; and adjusting the current parking strategy of the present parking chip based on the driving habit and/or the parking preference to obtain an updated current parking strategy, to drive, by using the updated current parking strategy, the parking mechanism corresponding to the present parking chip to perform parking.

In other embodiments of the present disclosure, the driving habit and/or the parking preference of the driver can be further obtained based on historical driving data of the vehicle, such as an efficient and fast-oriented driving habit or parking preference, an energy-saving driving habit or parking preference, and a smooth driving habit or parking preference of the driver. Then, the current parking strategy of the present parking chip is adjusted based on the driving habit and/or the parking preference.

Optionally, in an embodiment of the present disclosure, the driving habit and/or the parking preference are obtained from a frequency and a wavelength of a historical parking signal of the vehicle.

For example, in the embodiments of the present disclosure, it is possible to obtain a parking parameter manually adjusted by the driver during each parking, identify a frequency and a wavelength of the parking signal, and determine the parking preference of the driver, to adjust a predetermined parking strategy and a pre-stored redundant parking strategy, making the parking action more in line with the driver's preference.

A relationship between the frequency and the wavelength of the parking signal and the parking preference may be shown in Table 1, which is a relationship table between the frequency and the wavelength of the parking signal and the parking preference.

**Table 1**

| Parking preference | Parking signal frequency | Parking signal wavelength |
|---|---|---|
| Aggressive preference | <1.5s⁻¹ | ≥40ms |
| Smooth preference | ≥1.5s⁻¹ | <40ms |

When the driver has aggressive preference, the parking signal is transmitted quickly and sensitively, and a parking force corresponding to the parking is relatively large. When the parking chip identifies that a wavelength of the parking signal is smaller than or equal to a predetermined threshold, the parking chip defaults it to a false touch. When the driver has smooth preference, the wavelength of the parking signal is relatively small, and the frequency of the parking signal is high. When the parking chip identifies that the wavelength of the parking signal is greater than the predetermined threshold, the parking chip defaults it to a false touch.

Through the above technical method, the parking strategy can be adjusted based on the driving habit and/or the parking preference of the driver. In this way, the current parking strategy better matches the driver's habit or preference, thereby improving a driver's driving experience.

Optionally, in an embodiment of the present disclosure, the method further includes, prior to the driving, by using the current parking strategy, the parking mechanism corresponding to the present parking chip to perform parking: collecting at least one wheel parameter of a wheel corresponding to the present parking chip; and adjusting the current parking strategy of the present parking chip based on the at least one wheel parameter to obtain an updated current parking strategy, to drive, by using the updated current parking strategy, the parking mechanism corresponding to the present parking chip to perform parking.

In actual implementation, the at least one wheel parameter of the wheel corresponding to the present parking chip, such as a wheel radius, a tire pressure, a wheel speed, or a current wheel steering angle, may be further collected in the embodiments of the present disclosure.

In the embodiments of the present disclosure, the current parking strategy of the present parking chip may be adjusted based on the at least one wheel parameter. For example, a required parking force for a single wheel during vehicle parking is calculated based on the wheel radius, the tire pressure, and a wheel wear condition. Moreover, by comparing the parking force in the current parking strategy with the required parking force, the current parking strategy is optimized to obtain an updated current parking strategy that takes the required parking force as an actual parking force.

Through the above technical method, the parking strategy can be adjusted based on the wheel parameter of the corresponding wheel, which reduces the wheel wear, while enabling the parking strategy to better match an actual condition of the wheel, and allows for a corresponding adjustment to be made to the wheel.

Optionally, in an embodiment of the present disclosure, the method further includes, prior to the driving, by using the current parking strategy, the parking mechanism corresponding to the present parking chip to perform parking: detecting whether the vehicle satisfies a predetermined parking condition; and transmitting a parking failure reminder to a driver in response to detecting that the vehicle does not satisfy the predetermined parking condition.

As a possible implementation manner, in the embodiments of the present disclosure, it can be detected whether the vehicle satisfies the predetermined parking condition before the parking mechanism corresponding to the present parking chip is driven using the current parking strategy to perform parking. The predetermined parking condition may include a determination of whether the parking mechanism is faulty/invalid.

When the vehicle satisfies the predetermined parking condition, in the embodiments of the present disclosure, the parking mechanism corresponding to the present parking chip may be driven using the current parking strategy to perform parking. When the vehicle does not satisfy the predetermined parking condition, in the embodiments of the present disclosure, the parking failure reminder may be pushed to the driver through an acoustic reminder, an optical reminder, and/or a vibration reminder. In this way, the driver can manually adjust the parking parameter or take over parking control based on the failure reminder, and perform timely troubleshooting and maintenance.

The acoustic reminder may be a voice reminder or a warning tone reminder played through a vehicle speaker. The optical reminder may be a corresponding flashing icon reminder on a dashboard or a text reminder on a center console. The vibration reminder may be a steering wheel vibration reminder or a seat vibration reminder. A specific reminder manner may be set by those skilled in the art as actual conditions, and is not specifically limited herein.

Through the above technical method, the parking failure reminder can be transmitted when the vehicle does not satisfy the predetermined parking condition, facilitating the driver to take over control and troubleshoot in a timely manner.

Optionally, in an embodiment of the present disclosure, the method further includes, while transmitting the parking failure reminder to the driver: generating a parking control recommendation reminder for the vehicle based on overall vehicle information of the vehicle; and pushing the parking control recommendation reminder to the driver.

In actual implementation, in the embodiments of the present disclosure, when the vehicle does not satisfy the predetermined parking condition, a reference operation for the driver to perform manual parking may be generated based on the overall vehicle information, such as a current wheel speed, a current driving road condition, a target parking brake force, and fault information of the vehicle, to prevent a traffic accident caused by the driver's failure to respond in time in case of an emergency.

In summary, in the present disclosure, the parking instruction from the communication device or other parking chips can be received without the need for the communication device to uniformly and simultaneously transmit the parking instruction to each parking chip, thereby improving signal transmission efficiency and reducing channel occupation. The present parking chip may determine the current parking strategy based on the parking signal, such that the current parking strategy can be adjusted accordingly in response to different parking signals, thereby adapting to various operating conditions. The vehicle is controlled to complete the parking action based on the current parking strategy, to achieve the stable parking of the vehicle and improve the parking safety. In addition, the chips are independent of each other. When one chip fails, other chips other than the faulty parking chip may still complete the parking action to realize the redundant parking.

FIGS. 5a to 5h are schematic structural diagrams of a parking apparatus according to an embodiment of the present disclosure. Exemplarily, as shown in FIG. 5a, the parking apparatus 50 is applied to any one parking chip of the first parking chip, the second parking chip, the third parking chip, and the fourth parking chip. The parking apparatus 50 includes: a receiving module 501, a determination module 502, and a driving module 503.

In an embodiment of the present disclosure, the receiving module 501 is configured to receive a parking signal transmitted by the communication device or another parking chip other than a present parking chip to which the parking apparatus is applied. The determination module 502 is configured to determine a current parking strategy of the present parking chip based on the parking signal. The driving module 503 is configured to drive, by using the current parking strategy, a parking mechanism corresponding to the present parking chip to perform parking. The parking mechanism is one parking mechanism included in the first parking device or the second parking device.

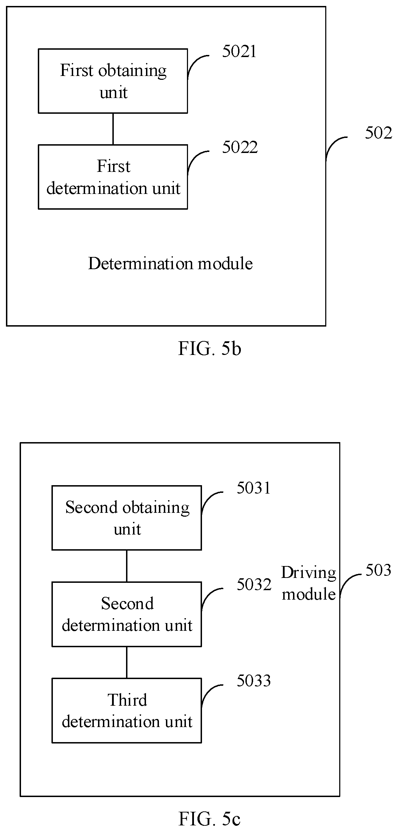

Optionally, as shown in FIG. 5b, in an embodiment of the present disclosure, the determination module 502 includes: a first obtaining unit 5021 and a first determination unit 5022.The first obtaining unit 5021 is configured to obtain overall vehicle information of the vehicle. The first determination unit 5022 is configured to determine the current parking strategy based on the overall vehicle information and pose information of a wheel corresponding to the present parking chip.

Optionally, as shown in FIG. 5c, in an embodiment of the present disclosure, the driving module 503 includes: a second obtaining unit 5031, a second determination unit 5032, and a third determination unit 5033. The second obtaining unit 5031 is configured to obtain environment information of a current environment where the vehicle is located. The second determination unit 5032 is configured to determine at least one control parameter of the current parking strategy based on the environment information. The third determination unit 5033 is configured to determine a target parking force of the parking mechanism based on the at least one control parameter, to control the parking mechanism corresponding to the present parking chip to perform parking.

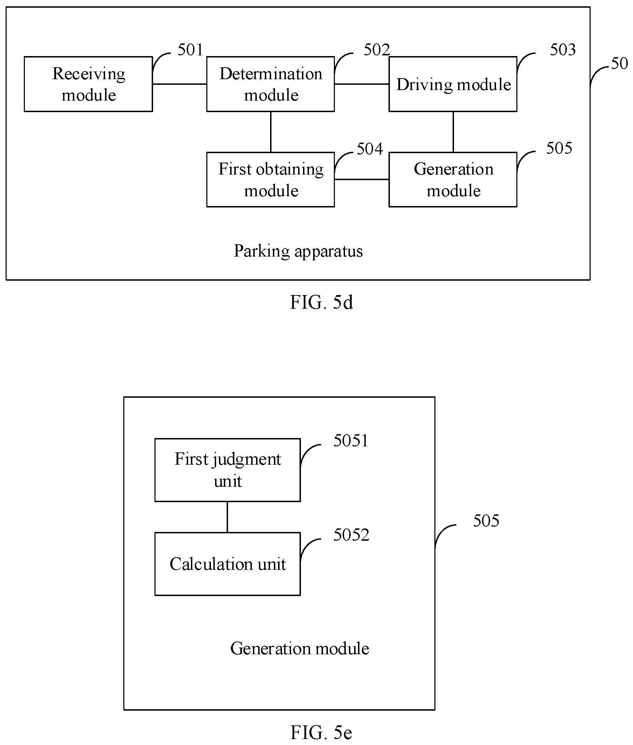

Optionally, as shown in FIG. 5d, in an embodiment of the present disclosure, the parking apparatus 50 further includes: a first obtaining module 504 and a generation module 505. The first obtaining module 504 is configured to obtain an actual service life of a wheel corresponding to the present parking chip. The generation module 505 is configured to generate the current parking strategy based on the actual service life and an initial parking strategy.

Optionally, as shown in FIG. 5e, in an embodiment of the present disclosure, the generation module 505 includes: a first judgment unit 5051 and a calculation unit 5052. The first judgment unit 5051 is configured to determine whether the actual service life reaches a predetermined life limit. The calculation unit 5052 is configured to, in response to determining that the actual service life reaches the predetermined life limit, calculate a parking force of a wheel corresponding to the another parking chip, and generate the current parking strategy based on the parking force and the initial parking strategy.

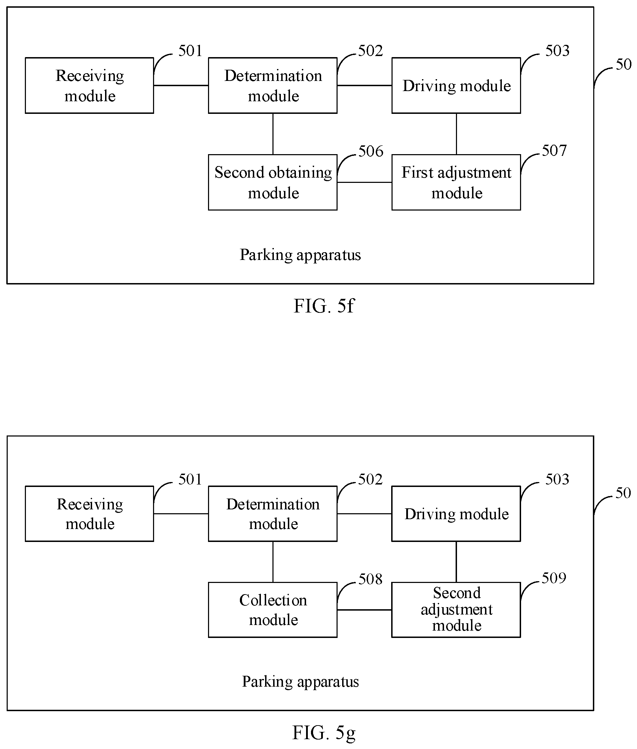

Optionally, as shown in FIG. 5f, in an embodiment of the present disclosure, the parking apparatus 50 further includes: a second obtaining module 506 and a first adjustment module 507. The second obtaining module 506 is configured to obtain a driving habit and/or parking preference of a driver. The first adjustment module 507 is configured to adjust the current parking strategy of the present parking chip based on the driving habit and/or the parking preference to obtain an updated current parking strategy, to drive, by using the updated current parking strategy, the parking mechanism corresponding to the present parking chip to perform parking.

Optionally, in an embodiment of the present disclosure, the driving habit and/or the parking preference are obtained from a frequency and a wavelength of a historical parking signal of the vehicle.

Optionally, as shown in FIG. 5g, in an embodiment of the present disclosure, the parking apparatus 50 further includes: a collection module 508 and a second adjustment module 509. The collection module 508 is configured to collect at least one wheel parameter of a wheel corresponding to the present parking chip. The second adjustment module 509 is configured to adjust the current parking strategy of the present parking chip based on the at least one wheel parameter to obtain an updated current parking strategy, to drive, by using the updated current parking strategy, the parking mechanism corresponding to the present parking chip to perform parking.

Optionally, in an embodiment of the present disclosure, the parking signal includes at least one of a parking operating condition signal, a vehicle speed signal, a wheel parameter signal, or a parking-environment operating condition signal.

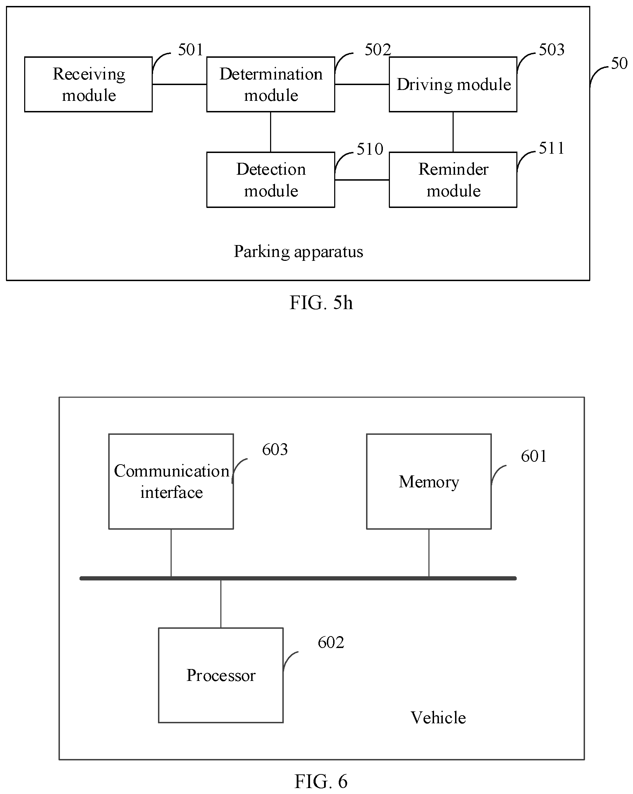

Optionally, as shown in FIG. 5h, in an embodiment of the present disclosure, the parking apparatus 50 further includes: a detection module 510 and a reminder module 511. The detection module is configured to detect whether the vehicle satisfies a predetermined parking condition. The reminder module 511 is configured to transmit a parking failure reminder to a driver in response to detecting that the vehicle does not satisfy the predetermined parking condition.

Optionally, in an embodiment of the present disclosure, the reminder module 511 is further configured to generate a parking control recommendation reminder for the vehicle based on overall vehicle information of the vehicle, and push the parking control recommendation reminder to the driver.

In summary, in the present disclosure, the parking instruction from the communication device or the another parking chip can be received without the need for the communication device to uniformly and simultaneously transmit the parking instruction to each parking chip, thereby improving the signal transmission efficiency and reducing the channel occupation. The present parking chip may determine the current parking strategy based on the parking signal, such that the current parking strategy can be adjusted accordingly in response to different parking signals, thereby adapting to various operating conditions. The vehicle is controlled to complete the parking action based on the current parking strategy, to achieve the stable parking of the vehicle and improve the parking safety. In addition, the chips are independent of each other. When one chip fails, other chips other than the faulty parking chip may still complete the parking action to realize the redundant parking.

FIG. 6 is a schematic structural diagram of a vehicle according to an embodiment of the present disclosure. The vehicle may include: a memory 601, a processor 602, and a computer program stored in the memory 601 and executable on the processor 602. The processor 602 implements the method for parking a vehicle provided in the above embodiments when executing the program. The vehicle further includes: a communication interface 603 configured to communicate between the memory 601 and the processor 602. The memory 601 is configured to store a computer program executable on the processor 602. The memory 601 may include a high-speed Random Access Memory (RAM), and may also include a non-volatile memory, such as at least one disk memory.

When the memory 601, the processor 602, and the communication interface 603 are implemented independently, the communication interface 603, the memory 601, and the processor 602 may be interconnected and communicate with each other via a bus. The bus may be an Industry Standard Architecture (ISA) bus, a Peripheral Component (PCI) bus, or an Extended Industry Standard Architecture (EISA) bus. The buses may be divided into an address bus, a data bus, a control bus, etc. For the convenience of description, only one thick line is used in FIG. 6, but it does not mean that there is only one bus or one type of bus.

Optionally, in a specific implementation, when the memory 601, the processor 602, and the communication interface 603 are integrated on a single chip for an implementation, the memory 601, the processor 602, and the communication interface 603 may communicate with each other through an internal interface. The processor 602 may be a Central Processing Unit (CPU), or an Application Specific Integrated Circuit (ASIC), or one or more integrated circuits configured to implement an embodiment of the present disclosure.

A computer-readable storage medium is further provided according to an embodiment. The computer-readable storage medium has a computer program stored thereon. The computer program, when executed by a processor, implements the method for parking a vehicle as described above.

In the description of this specification, descriptions with reference to the terms "an embodiment", "some embodiments", "an example", "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or N embodiments or examples in a suitable manner. In addition, those skilled in the art can combine the different embodiments or examples and the features of the different embodiments or examples described in this specification without contradicting each other.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "N" means at least two, such as two, three, etc., unless otherwise specifically defined.

Any process or method described in a flowchart or described herein in other ways may be understood to include one or N modules, segments, or portions of codes of executable instructions for achieving specific logical functions or steps in the process. The scope of a preferred embodiment of the present disclosure includes other implementations. A function may be performed not in a sequence shown or discussed, including a substantially simultaneous manner or a reverse sequence based on the function involved, which should be understood by those skilled in the art to which the embodiments of the present disclosure belong.

The logic and/or step described in other manners herein or shown in the flowchart, for example, a particular sequence table of executable instructions for realizing the logical function, may be specifically realized in any computer readable medium to be used by the instruction execution system, device or equipment (such as the system based on computers, the system including processors or other systems capable of obtaining the instructions from the instruction execution system, device and equipment and executing the instructions), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium include but are not limited to: an electronic connection (an electronic device) with one or N wires, a portable computer disk case (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of being printed with programs thereon, this is because, for example, the paper or other appropriate medium may be optically scanned and then edited, decrypted or processed with other appropriate methods when necessary to obtain the programs in an electric manner, and then the programs may be stored in the computer memory.

It should be understood that each part of the present disclosure may be realized by the hardware, software, firmware or their combination. In the above embodiments, N steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above method of the embodiments of the present disclosure may be achieved by instructing the related hardware by programs. The programs may be stored in a computer-readable storage medium, and the programs include one or a combination of the steps in the method embodiments of the present disclosure when run on a computer.

In addition, each function cell of the embodiments of the present disclosure may be integrated in a processing module, or these cells may exist separately physically, or two or more cells may be integrated in a processing module. The integrated module may be realized in a form of hardware or in a form of software function modules. When the integrated module is realized in the form of a software function module and is sold or used as a standalone product, the integrated module may be stored in a computer-readable storage medium.

The storage medium mentioned above may be read-only memories, magnetic disks, CD, etc. Although embodiments according to the present disclosure have been shown and described, it would be appreciated by those skilled in the art that the above embodiments are illustrative and cannot be construed to limitation on the present disclosure, and changes, alternatives, modifications, and variations can be made in the embodiments without departing from the scope of the present disclosure.

## Claims

1. A method for parking a vehicle, wherein the vehicle comprises:
a first parking device and a second parking device that are disposed respectively corresponding to a front wheel and a rear wheel, wherein each of the first parking device and the second parking device comprises two parking mechanisms;
a first control assembly configured to drive the first parking device to perform parking, the first control assembly comprising a first parking chip and a second parking chip;
a second control assembly configured to drive the second parking device to perform parking, the second control assembly comprising a third parking chip and a fourth parking chip, wherein the first parking chip, the second parking chip, the third parking chip, and the fourth parking chip communicate with each other; and
a communication device in communication with the first control assembly or the second control assembly; and
wherein the method is applied to any one of the first parking chip, the second parking chip, the third parking chip, and the fourth parking chip, and the method comprises:
receiving a parking signal transmitted by the communication device or another parking chip among the first parking chip, the second parking chip, the third parking chip, and the fourth parking chip other than a present parking chip to which the method is applied;
determining a current parking strategy of the present parking chip based on the parking signal; and
driving, by using the current parking strategy, a parking mechanism corresponding to the present parking chip to perform parking.

2. The method according to claim 1, wherein said determining the current parking strategy of the present parking chip comprises:
obtaining overall vehicle information of the vehicle; and
determining the current parking strategy based on the overall vehicle information and pose information of a wheel corresponding to the present parking chip.

3. The method according to claim 1, wherein said driving, by using the current parking strategy, the parking mechanism corresponding to the present parking chip to perform parking comprises:
obtaining environment information of a current environment where the vehicle is located;
determining at least one control parameter of the current parking strategy based on the environment information; and
determining a target parking force of the parking mechanism based on the at least one control parameter, to control the parking mechanism corresponding to the present parking chip to perform parking.

4. The method according to claim 1, wherein the method further comprises, prior to said driving, by using the current parking strategy, the parking mechanism corresponding to the present parking chip to perform parking:
obtaining an actual service life of a wheel corresponding to the present parking chip; and
generating the current parking strategy based on the actual service life and an initial parking strategy.

5. The method according to claim 4, wherein said generating the current parking strategy based on the actual service life and the initial parking strategy comprises:
determining whether the actual service life reaches a predetermined life limit; and
in response to determining that the actual service life reaches the predetermined life limit, calculating a parking force of a wheel corresponding to the another parking chip, and generating the current parking strategy based on the parking force and the initial parking strategy.

6. The method according to claim 1, wherein the method further comprises, prior to said driving, by using the current parking strategy, the parking mechanism corresponding to the present parking chip to perform parking:
obtaining a driving habit and/or parking preference of a driver; and
adjusting the current parking strategy of the present parking chip based on the driving habit and/or the parking preference to obtain an updated current parking strategy, to drive, by using the updated current parking strategy, the parking mechanism corresponding to the present parking chip to perform parking.

7. The method according to claim 6, wherein the driving habit and/or the parking preference are obtained from a frequency and a wavelength of a historical parking signal of the vehicle.

8. The method according to claim 1, wherein the method further comprises, prior to said driving, by using the current parking strategy, the parking mechanism corresponding to the present parking chip to perform parking:
collecting at least one wheel parameter of a wheel corresponding to the present parking chip; and
adjusting the current parking strategy of the present parking chip based on the at least one wheel parameter to obtain an updated current parking strategy, to drive, by using the updated current parking strategy, the parking mechanism corresponding to the present parking chip to perform parking.

9. The method according to any one of claims 1 to 8, wherein the parking signal comprises at least one of a parking operating condition signal, a vehicle speed signal, a wheel parameter signal, or a parking-environment operating condition signal.

10. The method according to any one of claims 1 to 9, wherein the method further comprises, prior to said driving, by using the current parking strategy, the parking mechanism corresponding to the present parking chip to perform parking:
detecting whether the vehicle satisfies a predetermined parking condition; and
transmitting a parking failure reminder to a driver in response to detecting that the vehicle does not satisfy the predetermined parking condition.

11. The method according to claim 10, wherein the method further comprises, while transmitting the parking failure reminder to the driver:
generating a parking control recommendation reminder for the vehicle based on overall vehicle information of the vehicle; and
pushing the parking control recommendation reminder to the driver.

12. A vehicle, comprising:
a memory;
a processor; and
a computer program stored in the memory and executable on the processor, wherein the processor executes the program to implement the method according to any one of claims 1 to 11.

13. A computer-readable storage medium, storing a computer program, wherein the computer program, when executed, implements the method according to any one of claims 1 to 11.
